# EUROPÄISCHE PATENTSCHRIFT

(11) **EP 4 057 590 B1**
(45) Veröffentlichungstag und Bekanntmachung des Hinweises auf die Patenterteilung: **20.03.2024**
(21) Anmeldenummer: 21162200.6
(22) Anmeldetag: 12.03.2021
(51) Int. Cl.: H04L 9/40, H04L 67/12, H04L 9/32, F03D 7/04

(54) **VERFAHREN ZUM ÜBERWACHEN EINES EINSTELL- ODER PROGRAMMZUGRIFFS AUF EINE KOMPONENTE EINER WINDENERGIEANLAGE ODER EINES WINDPARKS SOWIE KOMPONENTE UND SYSTEM ZUM AUSFÜHREN DES VERFAHRENS**
METHOD FOR MONITORING ADJUSTMENT OR PROGRAM ACCESS TO A COMPONENT OF A WIND TURBINE OR A WIND FARM AND COMPONENT AND SYSTEM FOR CARRYING OUT THE METHOD
PROCÉDÉ DE SURVEILLANCE DE L'ACCÈS AU RÉGLAGE ET AU PROGRAMME SUR UN COMPOSANT D'UNE ÉOLIENNE OU D'UNE FERME ÉOLIENNE, AINSI QUE COMPOSANT ET SYSTÈME DE MISE EN UVRE DU PROCÉDÉ

(43) Veröffentlichungstag der Anmeldung: 14.09.2022
(73) Patentinhaber: Wobben Properties GmbH, 26607 Aurich (DE)
(72) Erfinder: Giertz, Helge, 26789 Leer (DE)
(74) Vertreter: Eisenführ Speiser

(56) Entgegenhaltungen:
- WO-A1-2014/000773
- CN-A- 109 976 239
- US-A1- 2014 228 976
- US-A1- 2017 363 065
- YUANYUAN LIN ET AL: "Research on the security of supervisory control communication in wind farm", SUSTAINABLE POWER GENERATION AND SUPPLY, 2009. SUPERGEN '09. INTERNATIONAL CONFERENCE ON, IEEE, PISCATAWAY, NJ, USA, 6. April 2009 (2009-04-06), Seiten 1-5, XP031576565, ISBN: 978-1-4244-4934-7

## Beschreibung

Die Erfindung betrifft das Überwachen von Einstell- oder Programmzugriffen auf Komponenten einer Windenergieanlage oder eines Windparks. Die Erfindung betrifft demnach den Bereich der Windenergie und hierbei insbesondere eine Überwachung von Zugriffen auf eine Windenergieanlage oder einen Windpark.

Eine Windenergieanlagensteuerung steuert und/oder regelt üblicherweise den Betrieb einer Windenergieanlage. Mehrere als Windpark organisierte Windenergieanlagen weisen häufig ein zentrales Steuersystem, das auch als SCADA-System oder Windparksteuerung bezeichnet wird, auf, wobei dieses Steuersystem die einzelnen zum jeweiligen Windpark gehörenden Windenergieanlagen als übergeordnete Steuerung steuert. In diesen Steuerungen, nämlich Windenergieanlagensteuerungen und Windparksteuerungen, werden Steuerwerte, Sollwerte sowie Parameter von Komponenten, wie einzelnen Geräten oder gesamten Systemen, verwaltet. Diese Steuerwerte, Sollwerte oder Parameter können von außerhalb durch Servicemitarbeiter, die eine entsprechende Zugriffsberechtigung haben, durch Zugriffe geändert werden. Diese Änderungen, die ein Servicemitarbeiter durchführen kann, bewirken eine Änderung des Systemverhaltens einer Komponente, einer oder mehrerer Windenergieanlagen oder eines gesamten Windparks.

Die Dokumente YUANYUAN LIN ET AL: "Research on the security of supervisory control communication in wind farm", SUSTAINABLE POWER GENERATION AND SUPPLY, 2009. SUPERGEN '09. INTERNATIONAL CONFERENCE ON, IEEE, PISCATAWAY, NJ, USA, 6. April 2009 (2009-04-06), Seiten 1-5, XP031576565 und CN 109 976 239 A beschreiben das Abfragen und Bestätigen von Zugriffsberechtigungsdaten, die einen Benutzernamen und ein Passwort umfassen. Die Dokumente beschreiben, dass mittels einer Prüfsumme, die in Abhängigkeit von den Zugriffsberechtigungsdaten ermittelt wird, geprüft wird, ob die Zugriffsberechtigungsdaten gültig sind oder nicht.

Zur Nachvollziehbarkeit der Änderungen, die von einem Servicemitarbeiter durch einen Einstell- oder Programmzugriff vorgenommen wurden, werden die Einstell- oder Programmzugriffe überwacht, indem diese in einem Protokoll protokolliert werden. Jeder Zugriff sowie die entsprechende Aktion, die bei dem Zugriff durchgeführt wird, wird beispielsweise zusammen mit einer Benutzerkennung und einem Zeitstempel in einer Protokolldatei gespeichert.

Um die Protokolldateien einfacher auswerten zu können, entsprechen die Benutzerkennungen der Servicemitarbeiter üblicherweise Benutzernamen, die den tatsächlichen Namen der Mitarbeiter oder Servicemitarbeiter, wiederspiegeln. Derartige Benutzerkennungen können demnach bereits als sogenannte personenbezogene Daten betrachtet werden. Aufgrund sich ändernder und immer strengender werdender Datenschutzrichtlinien wird zunehmend mehr gefordert, dass personenbezogene Daten, wie beispielsweise die Benutzerkennung, die einem Benutzernamen entspricht, dann gelöscht wird, sobald keine Notwendigkeit der Speicherung mehr besteht. Dies ist beispielsweise der Fall, wenn ein Servicemitarbeiter ein Unternehmen des Betreibers oder Herstellers einer Windenergieanlage oder eines Windparks verlässt. In diesem Fall müssen demnach die entsprechenden den Servicemitarbeiter betreffenden Protokolldateien oder zumindest die personenbezogenen Daten des Servicemitarbeiters in den Protokolldateien aus dem Speicher der Protokolle gelöscht werden.

Die Einhaltung von derartigen Datenschutzrichtlinien stellt demnach Windenergieanlagenhersteller und -betreiber vor eine schwierige Aufgabe, denn es sind viele tausend Steuersysteme von Windenergieanlagen oder Windparks weltweit verteilt, die jeweils eigene Protokolldateien umfassen, und die regelmäßig zur Erfüllung der Datenschutzrichtlinien aktualisiert werden müssen. Zwar werden die Protokolldateien häufig auch nur in zentralen Datenbanken gemeinschaftlich gespeichert, wobei insbesondere aber auch Betreiber Kopien dieser Protokolle erhalten und daher ein gezieltes Löschen von Benutzerkennungen zum Einhalten von Datenschutzrichtlinien kaum möglich ist. Eine Verteilung der Protokolle ist nämlich teilweise nicht nachvollziehbar, so dass eine Kontrolle sogar aus dem Zugriffsbereich eines Herstellers heraustreten kann.

Aufgabe der vorliegenden Erfindung ist es, den Problemen des Standes der Technik zu begegnen. Insbesondere ist es daher die Aufgabe der vorliegenden Erfindung, eine Überwachung von Einstell- oder Programmzugriffen auf Komponenten einer Windenergieanlage oder eines Windparks zu ermöglichen, bei der einerseits die Datenschutzrichtlinien, insbesondere bezüglich personenbezogener Daten, erfüllt werden, und andererseits eine Erfüllung dieser Richtlinien mit vertretbarem Aufwand möglich ist. Jedenfalls soll eine Alternative zum Stand der Technik gefunden werden.

Hierzu betrifft die Erfindung ein Verfahren nach Anspruch 1.

Demnach wird ein Verfahren vorgeschlagen, das zum Überwachen eines Einstell- oder Programmzugriffs auf eine Komponente einer Windenergieanlage oder eines Windparks dient. Programmzugriff umfasst insbesondere den allgemeinen Zugriff auf ein Programm, das beispielsweise mit einem Prozessor der Komponente ausgeführt wird, wobei aber vorzugsweise auch ein Programmzugriff, beispielsweise um die Software oder den Softwarecode, der auf der Komponente ausgeführt wird, zu ändern oder anzupassen, unter einen Programmzugriff fällt.

Das Verfahren umfasst zunächst das Abfragen von Zugriffsberechtigungsdaten. Hierbei umfassen die Zugriffsberechtigungsdaten zumindest eine Benutzerkennung, die vorzugsweise einem Benutzernamen entspricht. Dieses Abfragen erfolgt beispielsweise über ein Darstellen eines Dialogfeldes auf einer Anzeige, die Bestandteil der Komponente oder die mit der Komponente über eine Datenverbindung, z. B. eine Internetverbindung, verbunden ist. Ferner umfasst das Verfahren ein Empfangen einer Bestätigung über die Eingabe der Zugriffsberechtigungsdaten. Eine derartige Bestätigung wird beispielsweise dann empfangen, wenn ein Benutzer, der Zugriffsberechtigungsdaten eingegeben hat, seine Eingabe, beispielsweise mit Eingabemitteln, wie einer Tastatur, einem berührungssensitiven Teil der Anzeige oder einer Maus, bestätigt. Die Zugriffsberechtigungsdaten sind also direkt vor Ort der Komponente eingebbar oder es erfolgt ein Zugriff aus der Ferne, der auch als Remote-Zugriff bezeichnet werden kann.

In einem weiteren Schritt wird eine Zeichenfolge ermittelt, die abhängig von der Benutzerkennung ist, die als Zugriffsberechtigungsdaten oder als Teil der Zugriffsberechtigungsdaten eingegeben wurde. Diese ermittelte Zeichenfolge wird in einem Protokoll eines Speichers gespeichert. Vorzugsweise ist der Speicher Bestandteil der Komponente.

Die Komponente ist beispielsweise eine Windenergieanlagensteuerung oder eine Windparksteuerung, beispielsweise ein SCADA (Supervisory Control and Data Acquisition)-System. Das SCADA-System wird auch Überwachungs-, Steuerungs- und Datenerfassungssystem genannt.

Erfindungsgemäß wird die Zeichenfolge aus der Benutzerkennung mit einer vordefinierten Hash-Funktion, also unter Verwendung der vordefinierten Hash-Funktion ermittelt. Die Hash-Funktion bezeichnet vorzugsweise eine Funktion, die eine Benutzerkennung auf eine Zeichenfolge abbildet, derart, dass eine Gesamtheit der möglichen Benutzerkennungen einer vergleichsweise großen Eingabemenge gegenüber einer Gesamtheit der möglichen Zeichenfolgen, die einer vergleichsweise kleineren Zielmenge entspricht, steht. Ferner ist die Hash-Funktion vordefiniert und diese Funktion in der Komponente hinterlegt.

Vorteilhafterweise wird demnach eine Benutzerkennung der Zugriffsberechtigungsdaten selbst nicht mehr im Protokoll gespeichert, sondern eine Zeichenfolge, die stellvertretend für die Benutzerkennung ist. Die Benutzerkennung ist vorzugsweise ein Benutzername, nämlich ein Name eines Benutzers, der beispielsweise ein Servicemitarbeiter ist. Diese Zeichenfolge wird mit einer Hash-Funktion berechnet, so dass die Zeichenfolge nicht eindeutig in eine Benutzerkennung zurücküberführbar ist. Die Zeichenfolge entspricht somit einer auf einfache Weise anonymisierten Benutzerkennung. Vielmehr ist nur bei Kenntnis der der Zeichenfolge zugehörigen Benutzerkennung aus der Zeichenfolge auf einen Benutzer rückschließbar.

Verlässt demnach beispielsweise ein Mitarbeiter ein Unternehmen und ist in allen Protokollen nur noch die Zeichenfolge enthalten, die stellvertretend für die Benutzerkennung von diesem Mitarbeiter steht, so ist es nicht nötig diese Zeichenfolgen aus den Protokollen zu entfernen, um Datenschutzrichtlinien, insbesondere im Hinblick auf die Löschung personenbezogener Daten, nachzukommen.

Gemäß einer ersten Ausführungsform wird eine Zugriffsberechtigung nach dem Empfang der Bestätigung über eine Eingabe der Zugriffsberechtigungsdaten überprüft, nämlich zumindest, ob diese gültig oder ungültig ist. Im Fall einer gültigen Zugriffsberechtigung, nämlich einer Zugriffsberechtigung, die Einstell- und/oder Programmzugriffe erlaubt, werden die der gültigen Zugriffsberechtigung, nämlich der Benutzerkennung der Zugriffsberechtigungsdaten zugeordnete Einstell- und Programmzugriffe erlaubt. Ist die Zugriffsberechtigung nicht gültig oder ungültig, so werden Einstell- und Programmzugriffe verhindert. In dem Speicher werden zusätzlich alle mit der gültigen Zugriffsberechtigung ausgeführten Einstell- und Programmzugriffe derart in dem Protokoll protokolliert, dass diese mit der Zeichenfolge verknüpft sind, die aus der Benutzerkennung ermittelt wurde.

Demnach werden die Einstell- und Programmzugriffe zusammen mit der Zeichenfolge im Protokoll protokolliert, so dass bei Kenntnis der Zuordnung einer Benutzerkennung zu einer Zeichenfolge eindeutig ein Einstell- oder Programmzugriff auf einen Benutzer, also beispielsweise einen Servicemitarbeiter, mit einer Benutzerkennung zurückführbar oder nachvollziehbar ist.

Gemäß einer weiteren Ausführungsform wird die Benutzerkennung nicht in der Komponente, insbesondere dem Speicher, nach dem Empfangen einer Bestätigung über die Eingabe der Zugriffsberechtigung gespeichert. Das heißt, die Benutzerkennung wird lediglich in Kombination mit einem Schlüssel oder einem Passwort verwendet, um einen Benutzer, also beispielsweise einen Servicemitarbeiter, anhand der Zugriffsberechtigungsdaten zu identifizieren und eine gültige Zugriffsberechtigung festzustellen. Die Benutzerkennung selbst wird jedoch nach Empfangen der Bestätigung über die Eingabe der Zugriffsberechtigungsdaten nicht in der Komponente, insbesondere auch nicht außerhalb des Protokolls, gespeichert. So wird sichergestellt, dass im Fall, dass die Benutzerkennung ein Benutzername ist, keinerlei personenbezogene Daten in der Komponente gespeichert sind.

Gemäß einer weiteren Ausführungsform ist eine zentrale Einheit vorgesehen, die entfernt von der Komponente der Windenergieanlage oder des Windparks liegt. Die zentrale Einheit ist insbesondere eine Leitzentrale für mehrere Windparks. In der zentralen Einheit wird eine Zuordnungstabelle, die vorzugsweise eine Hash-Tabelle ist, hinterlegt. Die Zuordnungstabelle umfasst mehrere Einträge, wobei jeder Eintrag jeweils eine Benutzerkennung und eine mit der vordefinierten Hash-Funktion aus der jeweiligen Benutzerkennung ermittelte Zeichenfolge umfasst.

Eine Zuordnungstabelle ist somit in einer zentralen Einheit, die unterschiedlich zu einer Komponente ist, gespeichert. Zur Auswertung eines Protokolls durch einen Benutzer ist es daher sichergestellt, dass, da die Benutzerkennung vorzugsweise in der Komponente selbst nicht gespeichert wird, anhand der Zuordnungstabelle aus der Zeichnungsfolge eine Benutzerkennung ablesbar ist. Die zentrale Einheit ist ferner vorzugsweise gegen Zugriffe derart geschützt, dass nur ein bestimmter oder kleiner Personenkreis eine gültige Zugriffsberechtigung für das Auslesen und/oder Anzeigen von Protokollen auf die Zuordnungstabelle als eine gültige Zugriffsberechtigung auf die Komponente hat, so dass aus der Zeichenfolge nur berechtigte Personen auf die Benutzerkennung rückschließen können. Die Benutzerkennung ist somit weiter geschützt.

Gemäß einer weiteren Ausführungsform wird die Zuordnungstabelle aktualisiert, indem ein Eintrag, nämlich eine Benutzerkennung mit zugeordneter Zeichenfolge, hinzugefügt oder entfernt wird. Diese Aktualisierung kann vorzugsweise in regelmäßigen Abständen, beispielsweise monatlich, quartalsweise, jährlich oder ereignisabhängig erfolgen. Besonders bevorzugt werden somit regelmäßig aber auch ereignisabhängig neue Mitarbeiter mit den ihnen zugeordneten Benutzerkennungen bzw. ihrem Benutzeramen der Zuordnungstabelle hinzugefügt, wohingegen Benutzerkennungen, insbesondere Benutzernamen, ausscheidender Mitarbeiter aus der Zuordnungstabelle gelöscht werden. Unnötig gespeicherte personenbezogene Daten werden somit nicht weiter gespeichert und Datenschutzrichtlinien erfüllt.

Gemäß einer weiteren Ausführungsform wird im Fall, dass Zugriffsberechtigungsdaten eingegeben werden, die einer gültigen Zugriffsberechtigung fürdas Auslesen und/oder Anzeigen von Protokollen entsprechen, das Protokoll einer Komponente über eine Anzeige, beispielsweise der Komponente, angezeigt oder dargestellt wird. Hierbei wird die Zeichenfolge unter Verwendung der Zuordnungstabelle als Benutzerkennung dargestellt oder es wird zusätzlich zur Zeichenfolge die Benutzerkennung dargestellt. Dies ist allerdings nur der Fall, wenn die Zeichenfolge einer Benutzerkennung in der Zuordnungstabelle zugeordnet ist. Ist die Zeichenfolge in der Zuordnungstabelle keiner Benutzerkennung zugeordnet, so wird keine Benutzerkennung angezeigt. Vorzugsweise wird ein Hinweis angezeigt, dass zu der Zeichenfolge in der Zuordnungstabelle keine Benutzerkennung hinterlegt ist.

Nur Personen mit einer gültigen Zugriffsberechtigung für das Auslesen und/oder Anzeigen von Protokollen, können so die Benutzerkennung zu einer Zeichenfolge ersichtlich machen. Die Benutzerkennung ist somit gegenüber unberechtigtem Zugriff geschützt. Insbesondere, nämlich wenn die Zugriffsberechtigung für das Auslesen und/oder Anzeigen von Protokollen ungültig ist, wird eine Benutzerkennung, auch wenn sie in der Zuordnungstabelle einer Zeichenfolge zugeordnet ist, nicht angezeigt.

Gemäß einer weiteren Ausführungsform wird zur Anzeige oder Darstellung des Protokolls eine Datenverbindung zwischen der Komponente und der zentralen Einheit hergestellt oder wenn eine derartige Datenverbindung bereits besteht, diese Datenverbindung verwendet. Die Datenverbindung ist beispielsweise eine Internetverbindung. Über die Datenverbindung wird die Zeichenfolge aus dem Protokoll an die zentrale Einheit übersendet. In der Tabelle wird daraufhin die der Zeichenfolge zugeordnete Benutzerkennung gesucht. Ist die Suche erfolgreich, so wird die zugeordnete Benutzerkennung an die Komponente übertragen, um diese beispielsweise anzeigen zu können. Im Fall einer erfolglosen Suche wird eine Indikation für eine erfolglose Suche an die Komponente übertragen. Protokolle sind somit auch vor Ort an einer Komponente selbst mit Benutzerkennungen auslesbar ohne, dass die Benutzerkennung selbst in der Komponente gespeichert sein muss.

Ferner umfasst die Erfindung eine Komponente einer Windenergieanlage oder eines Windparks, die vorzugsweise eingerichtet ist das Verfahren nach einer der vorherigen Ausführungsformen auszuführen. Die Komponente umfasst eine Benutzerschnittstelle, die beispielsweise eine Anzeige und eine Benutzereingabeeinheit aufweist. Die Anzeige und die Benutzereingabe sind vorzugsweise als berührungsempfindliche Anzeige, nämlich als Touchscreen, ausgebildet.

Die Komponente ist eingerichtet, Zugriffsberechtigungsdaten abzufragen, die mindestens eine Benutzerkennung umfassen. Die Benutzerkennung ist vorzugsweise ein Benutzername. Ferner ist die Komponente eingerichtet, eine Bestätigung über die Eingabe der Zugriffsberechtigungsdaten von der Benutzerschnittstelle zu empfangen. Außerdem ist die Komponente eingerichtet, eine von der Benutzerkennung abhängige Zeichenfolge zu ermitteln und die Zeichenfolge in einem Protokoll eines Speichers zu Speichern. Der Speicher ist beispielsweise ein Speicher der Komponente. Erfindungsgemäß ist die Komponente eingerichtet, die Zeichenfolge aus der Benutzerkennung mit einer vordefinierten Hash-Funktion zu ermitteln.

Gemäß einer Ausführungsform der Komponente ist die Komponente eingerichtet, die Zugriffsberechtigungsdaten nach dem Empfang der Bestätigung über eine Eingabe zu prüfen und im Fall einer gültigen Zugriffsberechtigung der Benutzerkennung zugeordnete Einstell- und Programmzugriffe zu erlauben. Ist die Zugriffsberechtigung ungültig, ist die Komponente eingerichtet, Einstell- und Programmzugriffe zu verhindern. Ferner ist die Komponente eingerichtet, alle mit der gültigen Zugriffsberechtigung ausgeführten Einstell- und Programmzugriffe derart in einem Protokoll zu protokollieren, dass diese mit der Zeichenfolge verknüpft sind, die aus der Benutzerkennung ermittelt wurde und das Protokoll zu speichern.

Außerdem umfasst die Erfindung ein System mit mehreren Komponenten und einer zentralen Einheit. Die zentrale Einheit liegt entfernt von der Komponente der Windenergieanlage oder des Windparks und ist vorzugsweise eine Leitzentrale für mehrere Windparks. In der zentralen Einheit ist eine Zuordnungstabelle, insbesondere eine Hash-Tabelle hinterlegt. Die Zuordnungstabelle umfasst mehrere Einträge, wobei jeder Eintrag jeweils eine Benutzerkennung und eine mit der vordefinierten Hash-Funktion aus der jeweiligen Benutzerkennung ermittelte Zeichenfolge umfasst.

Das System ist gemäß einer weiteren Ausführungsform eingerichtet, im Fall eingegebener Zugriffsberechtigungsdaten, die einer gültigen Zugriffsberechtigung für das Auslesen und/oder Anzeigen von Protokollen entsprechen, das Protokoll einer Komponente, beispielsweise über eine Anzeige, darzustellen. Hierbei wird die Zeichenfolge unter Verwendung der Zuordnungstabelle als Benutzerkennung dargestellt oder zusätzlich zur Zeichenfolge die Benutzerkennung dargestellt, wenn die Zeichenfolge als Benutzerkennung in der Zuordnungstabelle zugeordnet ist. Anderenfalls wird keine Benutzerkennung angezeigt. Entsprechen die Zugriffsberechtigungsdaten einer Zugriffsberechtigung, die ungültig für das Auslesen und/oder Anzeigen von Protokollen ist, so wird keine Benutzerkennung dargestellt.

Gemäß einer weiteren Ausführungsform des Systems umfasst das System zur Anzeige des Protokolls ein Mittel zum Herstellen einer Datenverbindung zwischen der Komponente und der zentralen Einheit. Die Mittel zum Herstellen der Datenverbindung sind insbesondere Mittel zum Herstellen einer Internetverbindung. Die Mittel dienen zum Herstellen einer Datenverbindung zwischen der Komponente und der zentralen Einheit. Ferner ist das System eingerichtet über eine mit den Mitteln zum Herstellen einer Datenverbindung hergestellte Datenverbindung die Zeichenfolge aus dem Protokoll an die zentrale Einheit zu übersenden und in der Tabelle eine der Zeichenfolge zugeordnete Benutzerkennung zu suchen. Außerdem ist das System eingerichtet, im Fall einer erfolgreichen Suche die zugeordnete Benutzerkennung an die Komponente zu übertragen und im Fall einer erfolglosen Suche eine Indikation für eine erfolglose Suche an die Komponente zu übertragen.

Außerdem umfasst die Erfindung ein Computerprogrammprodukt, das Instruktionen aufweist, die, wenn sie auf einem System, insbesondere einem System nach einer der vorgenannten Ausführungsformen, ausgeführt werden, das Verfahren nach einerdervorgenannten Ausführungsformen ausführen.

Weitere Ausführungsformen ergeben sich anhand der in den Figuren näher erläuterten Ausführungsbeispiele. Hierbei zeigen:
- Figur 1: eine Windenergieanlage;
- Figur 2: mehrere Windparks, die mit einer zentralen Einheit verbunden sind und
- Figur 3: die Schritte des Verfahrens.

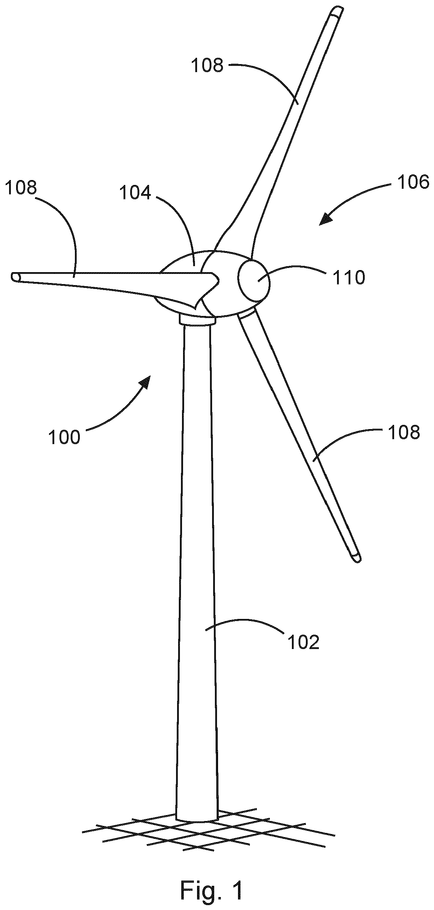

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage 100 durch den Wind in eine Drehbewegung versetzt und dreht somit auch einen elektrodynamischen Rotor oder Läufer eines Windenergieanlagengenerators, welcher direkt oder indirekt mit dem aerodynamischen Rotor 106 gekoppelt ist. Der elektrische Windenergieanlagengenerator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

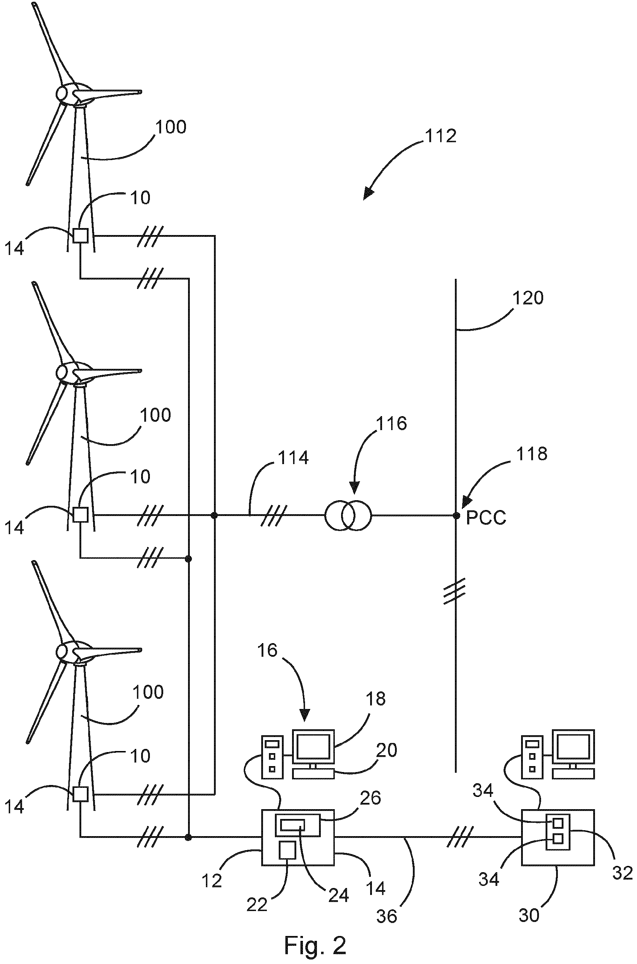

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen 100 eines Windparks 112. Die Windenergieanlagen 100 stellen ihre Leistung, nämlich insbesondere den erzeugten Strom, über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen.

Jede der Windenergieanlagen 100 weist eine Windenergieanlagensteuerung 10 auf, die zum Steuern und Regeln des Betriebs der Windenergieanlage dient. Die Windenergieanlagensteuerungen 10 sind mit einer Windparksteuerung 12 verbunden, die wiederum als übergeordnete Instanz alle Windenergieanlagen eines Windparks steuert und/oder regelt bzw. die Windenergieanlagensteuerungen 10 koordiniert. Die Windenergieanlagensteuerungen 10 sowie die Windparksteuerung 12 können auch als Komponente 14 der Windenergieanlage 100 oder des Windparks 112 bezeichnet werden.

Zum Anpassen des Betriebs ist exemplarisch für die Windparksteuerung 12 eine Benutzerschnittstelle 16 dargestellt, die eine Anzeige 18 sowie eine Benutzereingabeeinheit 20, nämlich eine Tastatur, umfasst. Mit dieser Benutzerschnittstelle 16 kann ein Servicemitarbeiter einen Einstell- oder Programmzugriff auf die Windparksteuerung 12 vornehmen. Hierzu werden mit der Benutzerschnittstelle 16 Zugriffsberechtigungsdaten abgefragt, bei der ein Benutzer zumindest eine Benutzerkennung eingeben muss und die Eingabe der Zugriffsberechtigungsdaten dann bestätigt. Daraufhin ermittelt die Windparksteuerung 12 mit einem Prozessor 22 anhand einer vordefinierten und in einem Speicher 24 hinterlegten Hash-Funktion aus der Benutzerkennung eine Zeichenfolge. Diese Zeichenfolge wird in dem Speicher 24 hinterlegt.

Ferner ist die Windparksteuerung 12 eingerichtet, alle Zugriffsaktionen, also alle Einstell- und Programmzugriffe eines Benutzers, der sich mit einer Benutzerkennung bei der Windparksteuerung 12 angemeldet hat, in einem Protokoll 24 zu protokollieren. Das Protokoll 24 ist ebenfalls in einem Speicher 26 der Windparksteuerung 12 gespeichert. Das gespeicherte Protokoll 24 kann über die Benutzerschnittstelle 16 von einer Person ausgelesen werden, die eine gültige Zugriffsberechtigung für das Auslesen oder Anzeigen von Protokollen hat und hierfür entsprechende Zugriffsberechtigungsdaten eingibt.

In dem Protokoll selbst wird die Benutzerkennung nicht gespeichert, so dass zunächst lediglich eine Zeichenfolge, die repräsentativ für die Benutzerkennung ist, zusammen mit den Protokolleinträgen zur Überwachung eines Einstell- oder Programmzugriffs dargestellt wird. Um nun zusätzlich zur Zeichenfolge auch die Benutzerkennung darstellen zu können, ist die Windparksteuerung 12 mit einer außerhalb des Windparks 112 angeordneten zentralen Einheit 30 verbunden. In der zentralen Einheit 30 ist eine Zuordnungstabelle 32 hinterlegt. Die Zuordnungstabelle umfasst mehrere Einträge 34, die jeweils eine Benutzerkennung und eine Zeichenfolge enthalten, die unter Verwendung der vordefinierten Hash-Funktion aus der Benutzerkennung ermittelt wird. Über die Datenverbindung 36 zwischen der Windparksteuerung 12, also der Komponente 14, und der zentralen Einheit 30 wird nun beim Auslesen eines Protokolls zum Überwachen eines Einstell- oder Programmzugriffs die Zeichenfolge des oder die Zeichenfolgen der Einträge an die zentrale Einheit 30 übertragen und in der Zuordnungstabelle 32 die Einträge gesucht, die die entsprechende Zeichenfolge oder Zeichenfolgen enthalten. Die zugehörigen Benutzerkennungen werden wiederum zurück an die Windparksteuerung 12 übertragen, um diese in dem Protokoll 24 darzustellen.

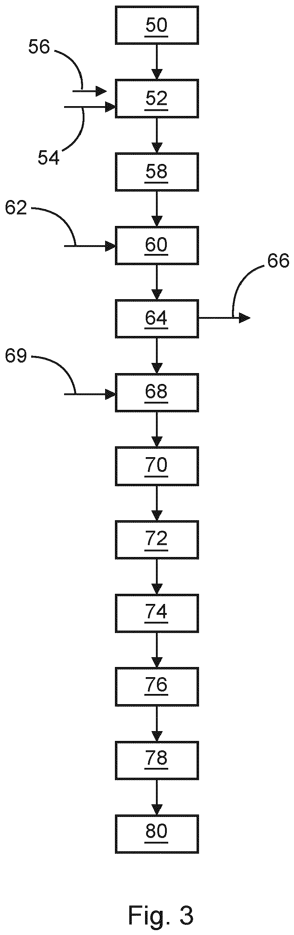

Figur 3 zeigt die Schritte des Verfahrens gemäß einem Ausführungsbeispiel. In einem ersten Schritt 50 wird eine Zugriffsberechtigung abgefragt. Im Schritt 52 werden Zugriffsberechtigungsdaten 54, die zumindest eine Benutzerkennung 56 empfangen. Weiter wird im Schritt 58 eine Bestätigung über die Eingabe empfangen. Im Schritt 60 wird eine Zeichenfolge aus der Benutzerkennung ermittelt, wobei hierfür eine vordefinierte Hash-Funktion 62 verwendet wird. In einem Schritt 64 wird dann die ermittelte Zeichenfolge 66 ausgegeben, um diese in einem Speicher 26 innerhalb eines Protokolls 24 zu speichern.

In dem Protokoll 24 werden im darauffolgenden Schritt 68 alle Einstell- oder Programmzugriffe 69, die empfangen werden, zusammen mit der Zeichenfolge 66 protokolliert. Ferner wird in einem Schritt 70 der Einstell- oder Programmzugriff eines Benutzers beendet.

Daraufhin kann in den weiteren Schritten zur Überwachung der Einstell- oder Programmzugriffe das Protokoll 24 ausgelesen werden. Im Schritt 72 werden dazu zunächst Zugriffsberechtigungsdaten für eine gültige Zugriffsberechtigung für das Auslesen oder Anzeigen des Protokolls 24 abgefragt. Im Fall einer gültigen Zugriffsberechtigung, die beispielsweise in Form der Zugriffsberechtigungsdaten durch einen Servicemitarbeiter eingegeben wurde, wird die Protokolldatei geladen. Im Schritt 74 werden alle im Protokoll enthaltenen Zeichenfolgen 66 an eine zentrale Einheit 30 über eine Datenverbindung 36 übertragen. In einer in der zentralen Einheit 30 gespeicherten Hash-Tabelle 32 werden im Schritt 76 Einträge 34 gesucht, die die Zeichenfolgen 66 enthalten und denen zusätzlich eine Benutzerkennung 56 zugeordnet ist. Die Benutzerkennungen 56 werden dann wieder zurück an die Komponente 14 im Schritt 78 übertragen und im Schritt 80 wird daraufhin zusätzlich zu den Zeichenfolgen 66 die aus der Zuordnungstabelle 32 erhaltenen Benutzerkennungen 56 angezeigt.

## Patentansprüche

1. Verfahren zum Überwachen eines Einstell- oder Programmzugriffs auf eine Komponente (14) einer Windenergieanlage (100) oder eines Windparks (112) umfassend die Schritte:
- Abfragen (50) von Zugriffsberechtigungsdaten (54), umfassend mindestens eine Benutzerkennung (56), insbesondere einen Benutzernamen,
- Empfangen (58) einer Bestätigung über die Eingabe der Zugriffsberechtigungsdaten (54),
- Ermitteln (60) einer von der Benutzerkennung (56) der empfangenen Zugriffsberechtigungsdaten (54) abhängigen Zeichenfolge (66) und
- Speichern (64) der ermittelten Zeichenfolge (66) in einem Protokoll (24) eines Speichers (26), wobei die Zeichenfolge (66) aus der Benutzerkennung (56) mit einer vordefinierten Hash-Funktion (62) ermittelt (60) wird,
wobei eine Zugriffsberechtigung nach dem Empfang (58) der Bestätigung über eine Eingabe der Zugriffsberechtigungsdaten (54) überprüft wird und
im Fall einer gültigen Zugriffsberechtigung der Benutzerkennung (56) zugeordnete Einstell- und Programmzugriffe erlaubt werden und anderenfalls Einstell- und Programmzugriffe verhindert werden, wobei
in dem Speicher (26) zusätzlich mit der gültigen Zugriffsberechtigung ausgeführten Einstell- und Programmzugriffe derart in dem Protokoll (24) protokolliert werden, dass diese mit der Zeichenfolge (66) verknüpft sind, die aus der Benutzerkennung (56) ermittelt wurde.

2. Verfahren nach Anspruch 1, wobei die Benutzerkennung (56) nicht in der Komponente (14), insbesondere dem Speicher (24), nach Empfang einer Bestätigung über die Eingabe der Zugriffsberechtigungsdaten (54), gespeichert wird.

3. Verfahren nach Anspruch 1 oder 2, wobei in einer zentralen Einheit (30), die entfernt von der Komponente (14) der Windenergieanlage (100) oder des Windparks (112) liegt und insbesondere eine Leitzentrale für mehrere Windparks (112) ist, eine Zuordnungstabelle (32), insbesondere eine Hash-Tabelle, hinterlegt wird, wobei die Zuordnungstabelle (32) mehrere Einträge (34) aufweist und jeder Eintrag (34) jeweils eine Benutzerkennung (56) und eine mit der vordefinierten Hash-Funktion (62) aus der jeweiligen Benutzerkennung (56) ermittelte Zeichenfolge (66) umfasst.

4. Verfahren nach Anspruch 3, wobei die Zuordnungstabelle (32) aktualisiert wird, indem eine Benutzerkennung (56) mit zugeordneter Zeichenfolge (66) hinzugefügt oder entfernt wird.

5. Verfahren nach Anspruch 3 oder 4, wobei im Fall eingegebener Zugriffsberechtigungsdaten, die einer gültigen Zugriffsberechtigung für das Auslesen und/oder Anzeigen von Protokollen entsprechen, das Protokoll (24) einer Komponente (14), beispielsweise über eine Anzeige (18), dargestellt wird, indem die Zeichenfolge (66) unter Verwendung der Zuordnungstabelle (32) als Benutzerkennung (56) dargestellt oder zusätzlich zur Zeichenfolge (66) die Benutzerkennung (56) dargestellt wird, wobei die Darstellung nur dann erfolgt, wenn die Zeichenfolge (66) einer Benutzerkennung (56) in der Zuordnungstabelle (32) zugeorndet ist, und wobei andernfalls keine Benutzerkennung (56) angezeigt wird.

6. Verfahren nach Anspruch 5, wobei zur Darstellung des Protokolls (24) eine Datenverbindung (36), insbesondere eine Internetverbindung, zwischen der Komponente (14) und der zentralen Einheit (30) hergestellt und/oder verwendet wird, die Zeichenfolge (66) aus dem Protokoll (24) an die zentrale Einheit (30) übersendet wird und in der Zuordnungstabelle (32) eine der Zeichenfolge zugeordnete Benutzerkennung (56) gesucht wird, wobei im Fall einer erfolgreichen Suche die zugeordnete Benutzerkennung (56) an die Komponente (14) übertragen und im Fall einer erfolglosen Suche, eine Identifikation über eine erfolglose Suche an die Komponente (14) übertragen wird.

7. Komponente einer Windenergieanlage (100) oder eines Windparks (112), die insbesondere eingerichtet ist, das Verfahren nach einem der Ansprüche 1 bis 6 auszuführen, vorzugsweise umfassend eine Benutzerschnittstelle (16), insbesondere eine Anzeige (18) und eine Benutzereingabeeinheit (20), wobei die Komponente (14) eingerichtet ist zum:
- Abfragen (50) von Zugriffsberechtigungsdaten (54), umfassend mindestens eine Benutzerkennung (56), insbesondere einen Benutzernamen,
- Empfangen (58) einer Bestätigung über die Eingabe der Zugriffsberechtigungsdaten (54),
- Ermitteln (60) einer von der Benutzerkennung (56) der empfangenen Zugriffsberechtigungsdaten (54) abhängigen Zeichenfolge (66) und
- Speichern (64) der ermittelten Zeichenfolge (66) in einem Protokoll (24) eines Speichers (26), wobei das Ermitteln (60) der Zeichenfolge (66) aus der Benutzerkennung (56) das Ermitteln mit einer vordefinierten Hash-Funktion (62) umfasst,
wobei die Komponente ferner eingerichtet ist, um eine Zugriffsberechtigung nach dem Empfang (58) der Bestätigung über eine Eingabe der Zugriffsberechtigungsdaten (54) zu überprüfen, im Fall einer gültigen Zugriffsberechtigung, der Benutzerkennung (56) zugeordnete Einstell- und Programmzugriffe zu erlauben und im Fall einer nicht gültigen Zugriffsberechtigung, Einstell- und Programmzugriffe zu verhindern, wobei die Komponente auch eingerichtet ist, um mit der gültigen Zugriffsberechtigung ausgeführte Einstell- und Programmzugriffe derart in dem Protokoll (24) zu protokollieren, dass diese mit der Zeichenfolge (66) verknüpft sind, die aus der Benutzerkennung (56) ermittelt wurde.

8. System mit mehreren Komponenten nach Anspruch 7 und einer zentralen Einheit (30), wobei das System eingerichtet ist, um eine Zuordnungstabelle (32) in der zentralen Einheit (30) zu hinterlegen, wobei die Zuordnungstabelle (32) mehrere Einträge (34) aufweist und jeder Eintrag (34) jeweils eine Benutzerkennung (56) und eine mit der vordefinierten Hash-Funktion (62) aus der jeweiligen Benutzerkennung (56) ermittelte Zeichenfolge (66) umfasst.

9. System nach Anspruch 8, wobei das System ferner eingerichtet ist, um im Fall eingegebener Zugriffsberechtigungsdaten (54), die einer gültigen Zugriffsberechtigung für das Auslesen und/oder Anzeigen von Protokollen entsprechen, das Protokoll (24) einer Komponente (14) darzustellen, indem die Zeichenfolge (66) unter Verwendung der Zuordnungstabelle (32) als Benutzerkennung (56) dargestellt oder zusätzlich zur Zeichenfolge (66) die Benutzerkennung (56) dargestellt wird, wobei das System weiter eingerichtet ist, um die Benutzerkennung (56) nur dann darzustellen, wenn die Zeichenfolge (66) einer Benutzerkennung (56) in der Zuordnungstabelle (32) zugeorndet ist, und um anderenfalls keine Benutzerkennung (56) anzuzeigen.

10. System nach Anspruch 8 oder 9, wobei das System ferner eingerichtet ist, um zur Darstellung des Protokolls (24) eine Datenverbindung (36) zwischen der Komponente (14) und der zentralen Einheit (30) herzustellen und/oder zu verwenden, die Zeichenfolge (66) aus dem Protokoll (24) an die zentrale Einheit (30) zu übersenden und in der Zuordnungstabelle (32) eine der Zeichenfolge zugeordnete Benutzerkennung (56) zu suchen, wobei im Fall einer erfolgreichen Suche, die zugeordnete Benutzerkennung (56) an die Komponente (14) übertragen und im Fall einer erfolglosen Suche eine Indikation über eine erfolglose Suche an die Komponente (14) übertragen wird.

11. Computerprogrammprodukt, das Instruktionen aufweist, die, wenn sie auf einem Prozessor, insbesondere einer Komponente nach Anspruch 7 oder einem System nach einem der Ansprüche 8 bis 10, ausgeführt werden, den Prozessor veranlassen ein Verfahren nach einem der Ansprüche 1 bis 6 auszuführen.

## Claims

1. Method for monitoring a setting or program access to a component (14) of a wind turbine (100) or a wind farm (112) comprising the steps of:
- querying (50) access authorization data (54), comprising at least one user ID (56), in particular a user name,
- receiving (58) a confirmation that the access authorization data (54) has been entered,
- determining (60) a character string (66) dependent on the user ID (56) of the received access authorization data (54), and
- storing (64) the determined character string (66) in a log (24) of a memory (26), wherein the character string (66) is determined (60) from the user ID (56) using a predefined hash function (62),
wherein an access authorization is checked after receiving (58) the confirmation of an input of the access authorization data (54), and
in the case of a valid access authorization, setting and program accesses assigned to the user ID (56) are permitted and otherwise setting and program accesses are prevented, wherein
in the memory (26) setting and program accesses carried out additionally with the valid access authorization are logged in the log (24) in such a way that they are linked to the character string (66) determined from the user ID (56).

2. Method according to claim 1, wherein the user ID (56) is not stored in the component (14), in particular the memory (24), after receiving a confirmation of the input of the access authorization data (54).

3. Method according to claim 1 or 2, wherein a mapping table (32), in particular a hash table, is stored in a central unit (30) which is remote from the component (14) of the wind turbine (100) or of the wind farm (112) and is in particular a control center for a plurality of wind farms (112), wherein the mapping table (32) has a plurality of entries (34) and each entry (34) comprises in each case a user ID (56) and a character string (66) determined from the respective user ID (56) using the predefined hash function (62).

4. Method according to claim 3, wherein the mapping table (32) is updated by adding or removing a user ID (56) with associated character string (66).

5. Method according to claim 3 or 4, wherein, in the case of input access authorization data corresponding to a valid access authorization for reading out and/or displaying logs, the log (24) of a component (14) is displayed, for example via a display (18), by displaying the character string (66) as a user ID (56) using the mapping table (32) or by displaying the user ID (56) in addition to the character string (66), wherein the display only takes place if the character string (66) is assigned to a user ID (56) in the mapping table (32), and wherein otherwise no user ID (56) is displayed.

6. Method according to claim 5, wherein a data connection (36), in particular an Internet connection, between the component (14) and the central unit (30) is established and/or used to display the protocol (24), the character string (66) from the protocol (24) is transmitted to the central unit (30) and a user ID (56) assigned to the character string is searched for in the mapping table (32), wherein, in the case of a successful search, the assigned user ID (56) is transmitted to the component (14) and, in the case of an unsuccessful search, an identification of an unsuccessful search is transmitted to the component (14).

7. Component of a wind turbine (100) or a wind farm (112), which is in particular arranged to carry out the method according to one of claims 1 to 6, preferably comprising a user interface (16), in particular a display (18) and a user input unit (20), wherein the component (14) is arranged to:
- querying (50) access authorization data (54), comprising at least one user ID (56), in particular a user name,
- receive (58) a confirmation that the access authorization data (54) has been entered,
- determine (60) a character string (66) dependent on the user ID (56) of the received access authorization data (54), and
- store (64) the determined character string (66) in a log (24) of a memory (26), wherein to determine (60) the string (66) from the user ID (56) comprises to determine with a predefined hash function (62),
wherein the component is further arranged to check an access authorization after receiving (58) of the confirmation of an input of the access authorization data (54), to permit setting and program accesses assigned to the user ID (56) in the case of a valid access authorization and to prevent setting and program accesses in the case of an invalid access authorization, wherein the component is also arranged to log setting and program accesses carried out with the valid access authorization in the log (24) in such a way that these are linked to the character string (66) which was determined from the user ID (56).

8. System with a plurality of components according to claim 7 and a central unit (30), wherein the system is arranged to store a mapping table (32) in the central unit (30), wherein the mapping table (32) has a plurality of entries (34) and each entry (34) comprises in each case a user ID (56) and a character string (66) determined from the respective user ID (56) using the predefined hash function (62).

9. System according to claim 8, wherein the system is further arranged to display the log (24) of a component (14) in case of input access authorization data (54) corresponding to a valid access authorization for reading out and/or displaying logs, by displaying the character string (66) as a user ID (56) using the mapping table (32) or by displaying the user ID (56) in addition to the character string (66), the system being further arranged to display the user ID (56) only if the character string (66) is assigned to a user ID (56) in the mapping table (32), and to otherwise display no user ID (56).

10. System according to claim 8 or 9, wherein the system is further arranged to establish and/or use a data connection (36) between the component (14) and the central unit (30) to display the protocol (24), to transmit the character string (66) from the protocol (24) to the central unit (30) and to search in the mapping table (32) for a user ID (56) assigned to the character string, wherein, in the case of a successful search, the assigned user ID (56) is transmitted to the component (14) and, in the case of an unsuccessful search, an indication of an unsuccessful search is transmitted to the component (14).

11. Computer program product comprising instructions which, when executed on a processor, in particular a component according to claim 7 or a system according to any one of claims 8 to 10, cause the processor to execute a method according to any one of claims 1 to 6.

## Revendications

1. Procédé de surveillance d'un accès au réglage ou programme à un composant (14) d'une éolienne (100) ou d'un parc éolien (112) comprenant les étapes suivantes :
- l'interrogation (50) de données d'autorisation d'accès (54), comprenant au moins un identifiant d'utilisateur (56), en particulier un nom d'utilisateur,
- la réception (58) d'une validation de la saisie des données d'autorisation d'accès (54),
- la détermination (60) d'une chaîne de caractères (66) dépendant de l'identifiant d'utilisateur (56) des données d'autorisation d'accès (54) reçues et
- l'enregistrement (64) de la chaîne de caractères (66) déterminée dans un protocole (24) d'une mémoire (26), dans lequel la chaîne de caractères (66) est déterminée (60) à partir de l'identifiant d'utilisateur (56) avec une fonction de hachage (62) prédéfinie,
dans lequel une autorisation d'accès est vérifiée après la réception (58) de la validation sur une saisie des données d'autorisation d'accès (54) et
dans le cas d'une autorisation d'accès valide, des accès au réglage et programme associés à l'identifiant d'utilisateur (56) sont permis et sinon des accès au réglage et programme sont empêchés, dans lequel
des accès au réglage et programme réalisés en outre avec l'autorisation d'accès valide sont consignés dans le protocole (24) dans la mémoire (26) de telle manière que ceux-ci soient liés à la chaîne de caractères (66) qui a été déterminée à partir de l'identifiant d'utilisateur (56).

2. Procédé selon la revendication 1, dans lequel l'identifiant d'utilisateur (56) n'est pas enregistré dans le composant (14), en particulier la mémoire (24), après réception d'une validation de la saisie des données d'autorisation d'accès (54).

3. Procédé selon la revendication 1 ou 2, dans lequel, dans une unité centrale (30) qui se trouve à distance du composant (14) de l'éolienne (100) ou du parc éolien (112) et en particulier un centre de contrôle pour plusieurs parcs éoliens (112), un tableau d'association (32), en particulier un tableau de hachage, est enregistré, dans lequel le tableau d'association (32) présente plusieurs entrées (34) et chaque entrée (34) comprend respectivement un identifiant d'utilisateur (56) et une chaîne de caractères (66) déterminée avec la fonction de hachage (62) prédéfinie à partir de l'identifiant d'utilisateur (56) respectif.

4. Procédé selon la revendication 3, dans lequel le tableau d'association (32) est actualisé, en ce qu'un identifiant d'utilisateur (56) avec la chaîne de caractères (66) associée est ajouté ou retiré.

5. Procédé selon la revendication 3 ou 4, dans lequel, dans le cas de données d'autorisation d'accès saisies qui correspondent à une autorisation d'accès valide pour la lecture et/ou l'affichage de protocoles, le protocole (24) d'un composant (14) est représenté par exemple par le biais d'un affichage (18), en ce que la chaîne de caractères (66) est représentée en utilisant le tableau d'association (32) comme identifiant d'utilisateur (56) ou outre la chaîne de caractères (66) l'identifiant d'utilisateur (56) est représenté, dans lequel la représentation est effectuée uniquement lorsque la chaîne de caractères (66) est associée à un identifiant d'utilisateur (56) dans le tableau d'association (32), et dans lequel sinon aucun identifiant d'utilisateur (56) n'est affiché.

6. Procédé selon la revendication 5, dans lequel, pour la représentation du protocole (24), une liaison de données (36), en particulier une liaison Internet, est établie entre le composant (14) et l'unité centrale (30) et/ou est utilisée, la chaîne de caractères (66) est envoyée du protocole (24) à l'unité centrale (30) et un identifiant d'utilisateur (56) associé à la chaîne de caractères est recherché dans le tableau d'association (32), dans lequel, dans le cas d'une recherche réussie, l'identifiant d'utilisateur (56) associé est transmis au composant (14) et, dans le cas d'une recherche vaine, une identification sur une recherche vaine est transmise au composant (14).

7. Composant d'une éolienne (100) ou d'un parc éolien (112) qui est conçu en particulier afin de réaliser le procédé selon l'une quelconque des revendications 1 à 6, de préférence comprenant une interface d'utilisateur (16), en particulier un affichage (18) et une unité de saisie d'utilisateur (20), dans lequel le composant (14) est conçu pour :
- interroger (50) des données d'autorisation d'accès (54), comprenant au moins un identifiant d'utilisateur (56), en particulier un nom d'utilisateur,
- recevoir (58) une validation de la saisie des données d'autorisation d'accès (54),
- déterminer (60) une chaîne de caractères (66) dépendant de l'identifiant d'utilisateur (56) des données d'autorisation d'accès (54) reçues et
- enregistrer (64) la chaîne de caractères (66) déterminée dans un protocole (24) d'une mémoire (26), dans lequel la détermination (60) de la chaîne de caractères (66) à partir de l'identifiant d'utilisateur (56) comprend la détermination avec une fonction de hachage (62) prédéfinie,
dans lequel le composant est de plus conçu afin de vérifier une autorisation d'accès après la réception (58) de la validation d'une saisie des données d'autorisation d'accès (54), de permettre, dans le cas d'une autorisation d'accès valide, des accès au réglage et programme associés à l'identifiant d'utilisateur (56) et d'empêcher, dans le cas d'une autorisation d'accès non valide, des accès au réglage et programme, dans lequel le composant est aussi conçu afin de consigner des accès au réglage et programme réalisés avec l'autorisation d'accès valide dans le protocole (24) de telle manière que ceux-ci soient liés à la chaîne de caractères (66) qui a été déterminée à partir de l'identifiant d'utilisateur (56).

8. Système avec plusieurs composants selon la revendication 7, et une unité centrale (30), dans lequel le système est conçu afin d'enregistrer un tableau d'association (32) dans l'unité centrale (30), dans lequel le tableau d'association (32) présente plusieurs entrées (34) et chaque entrée (34) comprend respectivement un identifiant d'utilisateur (56) et une chaîne de caractères (66) déterminée avec la fonction de hachage (62) prédéfinie à partir de l'identifiant d'utilisateur (56) respectif.

9. Système selon la revendication 8, dans lequel le système est de plus conçu afin de représenter, dans le cas de données d'autorisation d'accès (54) saisies qui correspondent à une autorisation d'accès valide pour la lecture et/ou l'affichage de protocoles, le protocole (24) d'un composant (14) en ce que la chaîne de caractères (66) est représentée en utilisant le tableau d'association (32) comme identifiant d'utilisateur (56) ou, outre la chaîne de caractères (66), l'identifiant d'utilisateur (56) est représenté, dans lequel le système est en outre conçu afin de représenter l'identifiant d'utilisateur (56) seulement lorsque la chaîne de caractères (66) est associée à un identifiant d'utilisateur (56) dans le tableau d'association (32), et afin de n'afficher autrement aucun identifiant d'utilisateur.

10. Système selon la revendication 8 ou 9, dans lequel le système est de plus conçu afin d'établir et/ou d'utiliser, pour la représentation du protocole (24), une liaison de données (36) entre le composant (14) et l'unité centrale (30), d'envoyer la chaîne de caractères (66) du protocole (24) à l'unité centrale (30) et de rechercher, dans le tableau d'association (32), un identifiant d'utilisateur (56) associé à la chaîne de caractères, dans lequel, dans le cas d'une recherche réussie, l'identifiant d'utilisateur (56) associé est transmis au composant (14) et, dans le cas d'une recherche vaine, une indication sur une recherche vaine est transmise au composant (14).

11. Produit de programme informatique qui présente des instructions qui, lorsqu'elles sont réalisées sur un processeur, en particulier un composant selon la revendication 7 ou un système selon l'une quelconque des revendications 8 à 10, amènent le processeur à réaliser un procédé selon l'une quelconque des revendications 1 à 6.
